# FASCICULE DE BREVET EUROPEEN

(11) **EP 3 004 920 B1**
(45) Date de publication et mention de la délivrance du brevet: **10.10.2018**
(21) Numéro de dépôt: 14726572.2
(22) Date de dépôt: 22.05.2014
(51) Int. Cl.: G01S 13/00, G01S 13/87, G01S 7/40

(54) **PROCÉDÉ DE LOCALISATION D'UNE CIBLE ET SYSTÈME RADAR MULTISTATIQUE POUR LA MISE EN OEUVRE D'UN TEL PROCÉDÉ**
VERFAHREN ZUM ORTEN EINES ZIELS UND MULTISTATISCHES RADARSYSTEM ZUR DURCHFÜHRUNG SOLCH EINES VERFAHRENS
METHOD FOR LOCATING A TARGET AND MULTISTATIC RADAR SYSTEM FOR IMPLEMENTING SUCH A METHOD

(30) Priorité: 24.05.2013 FR 1301182
(43) Date de publication de la demande: 13.04.2016
(73) Titulaire: THALES, 92400 Courbevoie (FR)
(72) Inventeur: MULLER, Daniel, F-31036 Toulouse (FR)
(74) Mandataire: Priori, Enrico
(86) Numéro de dépôt international: PCT/EP2014/060539
(87) Numéro de publication internationale: WO 2014/187898

(56) Documents cités:
- EP-A1- 1 500 951
- GB-A- 2 378 335
- US-A1- 2012 098 697
- INGGS M R ET AL: "Commensal radar using separated reference and surveillance channel configuration", ELECTRONICS LETTERS, IEE STEVENAGE, GB, vol. 48, no. 18, 30 août 2012 (2012-08-30) , pages 1158-1160, XP006041177, ISSN: 0013-5194, DOI: 10.1049/EL.2012.1124
- Moruzzis ET AL: "Alternative Detection Techniques to Supplement PSR Coverage", , 28 février 2007 (2007-02-28), pages 1-77, XP055106994, Extrait de l'Internet: URL:http://www.eurocontrol.int/sites/defau lt/files/publication/files/surveillance-re port-alternative-detection-techniques-to-s upplement-psr-coverage-20070228.pdf [extrait le 2014-03-11] cité dans la demande

## Description

L'invention porte sur un procédé de détection et localisation d'une cible qui peut être notamment un aéronef, sur son application à la surveillance primaire du trafic aérien, sur un système radar multistatique pour la mise en oeuvre d'un tel procédé et sur un système de surveillance du trafic aérien comprenant un tel système radar multistatique.

L'invention s'applique notamment à la surveillance primaire du trafic aérien au moyen de signaux d'opportunité tels que des signaux de télévision.

La surveillance primaire (sans coopération de la part des aéronefs-cibles) du trafic aérien se fait conventionnellement au moyen de radars « monostatiques », qui émettent des impulsions radio et reçoivent les réflexions desdites impulsions radio par des cibles (aéronefs) à détecter, l'émetteur et le récepteur de chaque radar étant co-localisés. Il existe également des systèmes dits « multistatiques », comportant un ou plusieurs émetteurs de signaux radios et une pluralité de récepteurs non co-localisés avec le ou les émetteurs pour recevoir les réflexions. Dans tous ces cas, il s'agit de systèmes « actifs », émettant des signaux radio spécifiquement destinées à la détection de cibles.

Il existe également des systèmes de détection dits passifs, qui exploitent, dans un schéma de détection de type multistatique, des signaux radioélectriques disponibles par ailleurs (« signaux d'opportunité »), par exemple des signaux radiophoniques ou de télévision. On parle alors de localisation cohérente passive (PCL de l'anglais « Passive Coherent Location »). Les systèmes purement passifs ne conviennent pas à des applications aussi critiques que la surveillance du trafic aérien ; toutefois, il serait possible - au moins en principe - de réaliser des systèmes « semi-actifs », utilisant des émetteurs d'opportunité selon une modalité coopérative, basée sur un accord avec les exploitants de ces émetteurs.

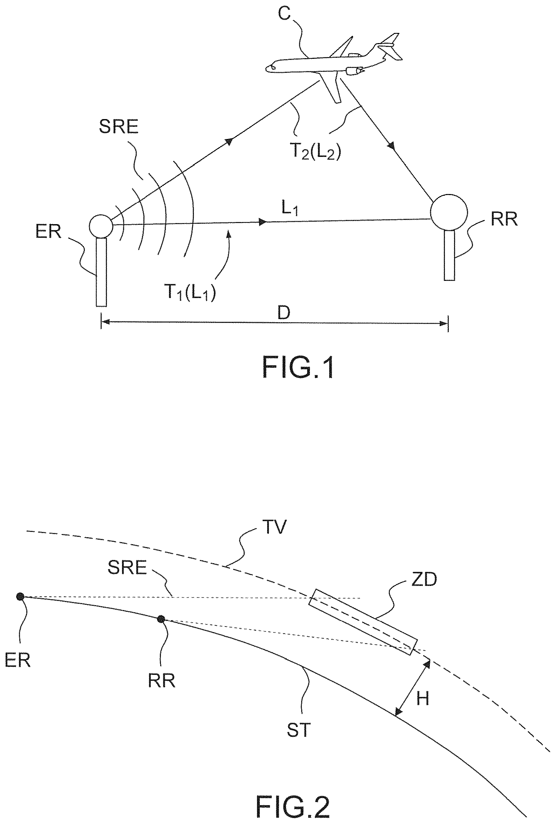

La figure 1 illustre le principe de base de la détection multistatique, qu'elle soit active ou passive. Un émetteur ER émet un signal radioélectrique SRE qui se propage dans l'air et atteint un récepteur RR suivant deux chemins :
- un trajet direct, T₁, dont la longueur L₁ est égale à la distance D entre l'émetteur et le récepteur ; et
- un trajet indirect, T₂, comprenant une réflexion par une cible à détecter C (ici, un aéronef), présentant une longueur L₂>L₁ qui dépend de la position de ladite cible.

Le signal ayant suivi le trajet direct (signal de référence) et celui ayant suivi le trajet indirect parviennent au récepteur depuis des directions différentes ; ils peuvent donc être discriminés, par exemple au moyen d'une antenne réseau équipée d'un circuit formateur de faisceau (synthèse numérique du diagramme de réception). Leur retard de propagation relatif, Δtₚ=ΔL/c=(L₂-L₁)/c (c étant la vitesse de propagation des signaux radioélectriques, c'est-à-dire la vitesse de la lumière) peut alors être déterminé par corrélation croisée, ce qui permet de calculer L₂ (L₁ étant supposé connu). On sait alors que la cible se trouve sur un ellipsoïde dont les foyers sont l'émetteur et le récepteur, définie comme le lieu des points dont la somme des distances aux deux foyers est égale à L₂ (« distance bistatique »). Si au moins deux autres paires émetteur/récepteur sont disponibles (par exemple, s'il y a au moins trois récepteurs pour un émetteur unique, ou inversement, ou encore deux émetteurs et deux récepteurs...), la cible C peut être localisée par intersection entre les différents ellipsoïdes. Dans le cas d'une cible en mouvement, le signal réfléchi est décalé en fréquence par effet Doppler. La corrélation est donc calculée plusieurs fois en introduisant des décalages fréquentiels différents entre les deux signaux ; la valeur de décalage fréquentiel pour lequel la corrélation est maximale permet de déterminer une « vitesse bistatique » qui est la dérivée de la distance bistatique L₂ par rapport au temps. Le vecteur de vitesse de la cible peut être obtenu à partir de trois « vitesses bistatiques » différentes.

On comprend facilement que, pour que la propagation directe soit possible, l'émetteur et le récepteur doivent être « en ligne de vue » ce qui implique que, du fait de la courbure de la Terre, leur distance peut difficilement excéder quelques dizaines de kilomètres, sauf si au moins l'un des deux est placé à une altitude élevée, ce qui n'est pas toujours possible ou souhaitable. Cela n'est pas un problème dans les radars multistatiques actifs, dans lesquels les diagrammes de rayonnement des émetteurs sont définis en fonction des exigences de détection, mais le devient dans le cas des systèmes de détection passive appliquée à la surveillance du trafic aérien.

La localisation de la cible est affectée d'une incertitude dont la valeur dépend de la largeur de bande des signaux radioélectriques utilisés pour la détection. Cela limite le choix des émetteurs d'opportunité pouvant être utilisés pour la surveillance du trafic aérien. En effet, l'utilisation d'émetteurs radiophoniques FM (largeur de bande d'environ 20 kHz) conduit à des incertitudes de l'ordre de 1 km et est donc inadaptée à la surveillance du trafic aérien civil (bien qu'elle convienne à d'autres applications, par exemple à la détection d'aéronefs), tandis que les signaux de télévision (largeur de bande d'environ 10 MHz) permettent d'atteindre des incertitudes de l'ordre de 20 m, ce qui est satisfaisant pour la surveillance du trafic aérien civil. Toutefois, les émetteurs de télévision émettent des faisceaux sensiblement parallèles au sol et présentant, dans un plan vertical, une faible ouverture angulaire (de l'ordre de 2° à 4°). Cela signifie qu'un avion volant à une altitude de 30.000 pieds (environ 9144 m) n'est éclairé que par des émetteurs de télévision situés à plus de 300 km.

Cette situation est illustrée à l'aide de la figure 2. Cette figure (qui n'est pas à l'échelle) représente un émetteur ER sur la surface - sphérique - de la Terre, ST. L'émetteur transmet un signal radioélectrique SRE sous la forme d'un faisceau relativement étroit, se propageant le long d'une direction moyenne parallèle au plan tangent à la surface terrestre ST au niveau de l'émetteur. La ligne hachurée TV représente la trajectoire de vol d'une cible constituée par un avion civil. Cette ligne est parallèle à la surface terrestre et se maintient à une distance H, de l'ordre de 9.000 m, de cette dernière. On peut voir que le faisceau SRE intercepte la trajectoire TV dans une zone de détection ZD qui est très éloignée de l'émetteur ER. Par contre le récepteur RR, qui présente une hauteur de quelques dizaines de mètres au plus par rapport à la surface ST, doit être beaucoup plus proche de l'émetteur ER pour pouvoir intercepter le faisceau SRE.

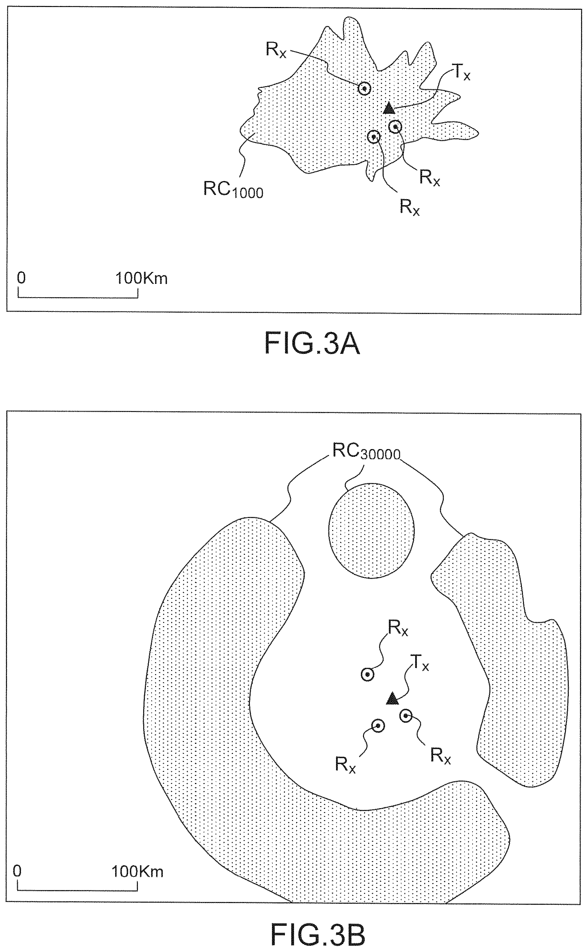

Par conséquent, la couverture assurée par un groupe d'émetteurs de télévision et de récepteurs formant un radar multistatique passif présente un « cône aveugle » aux altitudes élevées qui intéressent la surveillance aérienne. Les figures 3A et 3B illustrent cet effet dans le cas d'un système multistatique comprenant un émetteur de télévision Tx et trois récepteurs Rx situés dans un rayon d'environ 30 km autour de l'émetteur pour être « en ligne de vue » (« LOS », de l'anglais « Line of Sight »). Sur la figure 3A, la région RC₁₀₀₀ représente la couverture à une altitude de 1000 pieds (304,8 m) : on peut voir qu'elle présente une forme approximativement convexe. Sur la figure 3B, par contre, la région RC_{30.000} représente la couverture à une altitude de 30.000 pieds (9144 m), qui est en forme de couronne circulaire ; il n'y a pas de couverture dans la région centrale où se trouvent l'émetteur et les récepteurs. Les interruptions de la couronne correspondent aux directions d'alignement entre l'émetteur et un récepteur, pour lesquelles les diagrammes de rayonnement des récepteurs présentent des zéros afin de rejeter les signaux directs. On comprend aisément qu'il n'est pas pratique de réaliser une couverture intégrale d'un territoire en utilisant des régions de détection en forme de couronne, d'autant plus que la localisation des émetteurs de télévision n'est pas optimisée pour cette application. Par ailleurs, la localisation passive d'une cible située à une distance de plusieurs centaines de kilomètres des émetteurs et des récepteurs serait rendue difficile par l'atténuation importante subie par les signaux.

Le document WO 03/014764 divulgue un procédé de localisation cohérente collaborative n'exigeant pas que les récepteurs soient en ligne de vue du ou des émetteurs. Ce procédé utilise la détection de séquences prédéfinies insérées dans les signaux transmis par les émetteurs pour pallier l'absence de signaux directs de référence. Cette technique est contraignante, car elle nécessite une modification des signaux émis. En outre, l'intégration des signaux reçus ne peut se faire que sur la durée des séquences prédéfinies, qui sont généralement assez brèves ; cela implique que le procédé ne peut fonctionner que dans des bonnes conditions de rapport signal sur bruit.

Le document EP 1 972 962 divulgue un procédé de localisation cohérente passive et non coopérative n'exigeant pas que les récepteurs soient en ligne de vue des émetteurs. Ce procédé utilise l'extraction de caractéristiques distinctives (« fingerprints » c'est-à-dire, littéralement, « empreintes digitales ») des signaux reçus après réflexion par la cible pour pallier l'absence de signaux directs de référence. Une telle technique ne peut fonctionner que dans des hypothèses restrictives, notamment un rapport signal sur bruit élevé. En outre, elle parait mieux adaptée aux modulations analogiques qu'aux modulations numériques, de plus en plus répandues dans les signaux d'opportunité.

Le Rapport Final « ADT - Alternative Détection Techniques to Supplément PSR Coverage », préparé par la société Thales Air Systems pour Eurocontrol (Organisation européenne pour la sécurité de la navigation aérienne), décrit un système radar multistatique actif dans lequel le signal de référence peut être transmis des émetteurs aux récepteurs au moyen d'une liaison de transmission des données, par exemple filaire. Un tel système est constitué d'émetteurs et récepteurs dédiés, agencés selon un motif prédéfini et à des distances de quelques dizaines de kilomètres. L'utilisation de signaux d'opportunité n'est pas envisagée.

L'article de M.R. Inggs et al. « Commensal radar using separated reference and surveillance channel configuration », Electronics Letters, Vol. 48, no. 18, 30 août 2012 divulgue un radar bistatique pour surveillance aérienne utilisant des signaux d'opportunité comprenant un émetteur d'opportunité et un récepteur hors de vue dudit émetteur.

L'invention vise à remédier aux inconvénients précités de l'art antérieur.

Un objet de l'invention permettant d'atteindre ce but est un procédé de localisation d'une cible caractérisé en ce qu'il comporte les étapes suivantes :
a) recevoir, au moyen de N≥1 récepteurs, des signaux radioélectriques d'opportunité émis par M≥1 émetteurs et réfléchis par ladite cible, avec N·M≥3, ledit ou au moins un dit émetteur étant situé hors de la vue dudit ou d'au moins un dit récepteur ;
b) recevoir, au moyen d'une liaison de transmission de données, un ou plusieurs signaux dit de référence, représentatifs des signaux radioélectriques émis par ledit ou chaque dit émetteur situé hors de la vue dudit ou d'au moins un dit récepteur ; et
c) à partir desdits signaux radioélectriques et dudit ou desdits signaux de référence, déterminer la position de ladite cible ; caractérisé en ce que ladite étape c) comporte la reconstruction, à partir dudit ou desdits signaux de référence, de répliques des signaux radioélectriques qui seraient reçus par ledit ou chaque dit récepteur par propagation directe à partir dudit ou de chaque dit émetteur situé hors de vue si une telle propagation directe était possible, ladite reconstruction comportant une opération de compensation du retard de transmission dudit ou desdits signaux de référence le long de ladite ligne de transmission de données ; et en ce que ladite étape c) est mise en oeuvre à l'aide d'une référence temporelle commune au dit ou auxdits émetteurs et audit ou auxdits récepteurs.

D'une manière connue en soi on entend par « signaux d'opportunité » des signaux qui ne sont pas émis dans le but de permettre la détection d'une cible, mais pour accomplir une autre fonction, par exemple de transmission d'information. Il s'agira principalement de signaux radiophoniques ou de télévision. L'utilisation de signaux d'opportunité est préférée, mais un tel procédé pourrait également utiliser des signaux non d'opportunité.

La liaison de données peut être numérique (mode de réalisation préféré) ou analogique.

Conformément à l'invention, l'utilisation d'une liaison de transmission des données - qui peut être un réseau public ou privé de communications ou une liaison dédiée, notamment filaire - pour transmettre les signaux de référence permet d'agencer les récepteurs à une distance plus élevée du ou des émetteurs que si la condition de ligne de vue devait être satisfaite.

Selon différents modes de réalisation de l'invention :
- Ladite reconstruction peut comporter une opération de décalage en fréquence desdites répliques.
- Ladite reconstruction peut comporter également une opération de décalage temporel desdites répliques pour introduire un retard proportionnel à la distance entre ledit ou chaque émetteur situé hors de vue et ledit ou chaque dit récepteur.

- Ladite étape c) peut comprendre : le calcul d'au moins trois distances bistatiques entre ledit ou au moins un dit récepteur, ledit ou au moins un dit émetteur et ladite cible, ce calcul état effectué par corrélation entre les signaux reçus par ledit ou lesdits récepteurs et lesdites répliques ; et la localisation de ladite cible à partir desdites distances bistatiques.
- Plus particulièrement, ladite étape c) peut comprendre une opération de synchronisation itérative desdites répliques avec ladite référence temporelle commune, réalisée par minimisation des écarts entre les positions de ladite cible déterminées en utilisant différents ensembles de trois dites distances bistatiques. Ou alors, ladite étape c) peut comprendre une opération de synchronisation desdites répliques avec ladite référence temporelle commune au moyen de marqueurs temporels contenus dans lesdits signaux radioélectriques et dans ledit ou chaque dit signal de référence.
- Ladite corrélation peut être effectuée en utilisant une pluralité de versions desdites répliques présentant des décalages Doppler différents, son résultat étant également utilisé pour déterminer une vitesse de déplacement de ladite cible.
- Ladite étape c) peut comporter également une opération d'égalisation desdites répliques pour simuler une propagation directe entre un dit émetteur et un dit récepteur.
- Lesdits signaux radioélectriques peuvent être des signaux de télévision.
- Ledit ou chaque signal de référence peut être un signal source, à partir duquel une pluralité desdits émetteurs génèrent les signaux radioélectriques correspondants en utilisant des paramètres de modulation respectifs.

Un autre objet de l'invention est l'application d'un tel procédé à la localisation d'aéronefs, notamment pour la surveillance primaire du trafic aérien.

Encore un autre objet de l'invention est un système radar multistatique comprenant M≥1 émetteurs de signaux radioélectriques d'opportunité, N≥1 récepteurs pour recevoir lesdits signaux radioélectriques, avec N·M≥3, ledit ou au moins un dit émetteur étant situé hors de la vue dudit ou d'au moins un dit récepteur, ainsi que des moyens de traitement des données ; caractérisé en ce qu'il comprend également une liaison de transmission de données pour transmettre auxdits moyens de traitement des données un ou plusieurs signaux dit de référence, représentatifs des signaux radioélectriques émis par ledit ou chaque dit émetteur situé hors de la vue dudit ou d'au moins un dit récepteur, lesdits moyens de traitement des données étant configurés ou programmés pour déterminer la position d'une cible réfléchissant les signaux radioélectriques émis par ledit ou lesdits émetteurs à partir des signaux radioélectriques reçus par ledit ou lesdits récepteurs et dudit ou desdits signaux de référence. Ce système est caractérisé en ce que lesdits moyens de traitement de données sont configurés et programmés pour reconstruire, à partir dudit ou desdits signaux de référence, de répliques des signaux radioélectriques qui seraient reçus par ledit ou chaque dit récepteur par propagation directe à partir dudit ou de chaque dit émetteur situé hors de vue si une telle propagation directe était possible, et pour utiliser lesdites répliques pour déterminer la position de ladite cible, ladite reconstruction comportant une opération de compensation du retard de transmission dudit ou desdits signaux de référence le long de ladite ligne de transmission de données ; et en ce que lesdits moyens de traitement des données sont configurés ou programmés pour déterminer la position de ladite cible à l'aide d'une référence temporelle commune au dit ou auxdits émetteurs et audit ou auxdits récepteurs.

Selon différents modes de réalisation d'un tel système :
- Ledit signal de référence peut être représentatif d'un signal source à partir duquel une pluralité desdits émetteurs génèrent les signaux radioélectriques correspondants en utilisant des paramètres de modulation respectifs.
- Lesdits signaux radioélectriques peuvent être des signaux de télévision numérique terrestre.
- Lesdits moyens de traitement des données peuvent comprendre : des unités locales, associées à des récepteurs respectifs, programmées ou configurées pour : recevoir ledit ou au moins un dit signal de référence ; reconstruire, à partir dudit ou desdits signaux de référence, des répliques des signaux radioélectriques qui seraient reçus par lesdits récepteurs par propagation directe à partir dudit ou de chaque dit émetteur situé hors de vue si une telle propagation directe était possible ; et calculer, par corrélation entre les signaux reçus par lesdits récepteurs et lesdites répliques, une pluralité de distances bistatiques entre ledit récepteur, ledit ou au moins un dit émetteur et ladite cible ; et une unité centrale configurée ou programmée pour recevoir desdites unités locales les distances bistatiques correspondantes et les utiliser pour déterminer la position de ladite cible.
- Le système peut comprendre également un dispositif pour procurer une référence temporelle commune audit ou auxdits émetteurs, au dit ou auxdits récepteurs et auxdits moyens de traitement des données.

Encore un autre objet de l'invention est un système de surveillance du trafic aérien comportant, en tant que radar primaire, un tel système radar multistatique.

Un procédé et un système selon l'invention peuvent être qualifiés de « semi-actifs » ou « semi-passifs ». En effet, comme les procédés et systèmes purement passifs, ils exploitent des signaux d'opportunité, qui ne doivent pas être modifiés pour être adaptés à la détection de cibles. Toutefois, une forme de coopération est requise de la part des émetteurs, qui doivent transmettre les signaux de référence au moyen d'une liaison de données prévue à cet effet.

D'autres caractéristiques, détails et avantages de l'invention ressortiront à la lecture de la description faite en référence aux dessins annexés donnés à titre d'exemple et qui représentent, respectivement :
- la figure 1, le principe de la détection multistatique ;
- la figure 2, la propagation d'un faisceau d'ondes électromagnétiques généré par un émetteur de télévision ;
- les figures 3A et 3B, la couverture radar obtenue au moyen d'un système multistatique passif conventionnel à deux altitudes différentes ;
- la figure 4, un schéma illustrant le principe à la base d'un procédé selon l'invention ;
- la figure 5, le schéma fonctionnel d'un système selon un premier mode de réalisation de l'invention ;
- la figure 6, le schéma fonctionnel d'un système selon un deuxième mode de réalisation de l'invention alternatif audit premier mode de réalisation;
- la figure 7, un schéma d'ensemble d'un système selon ledit deuxième mode de réalisation de l'invention ; et
- les figures 8A et 8B, un résultat technique de l'invention.

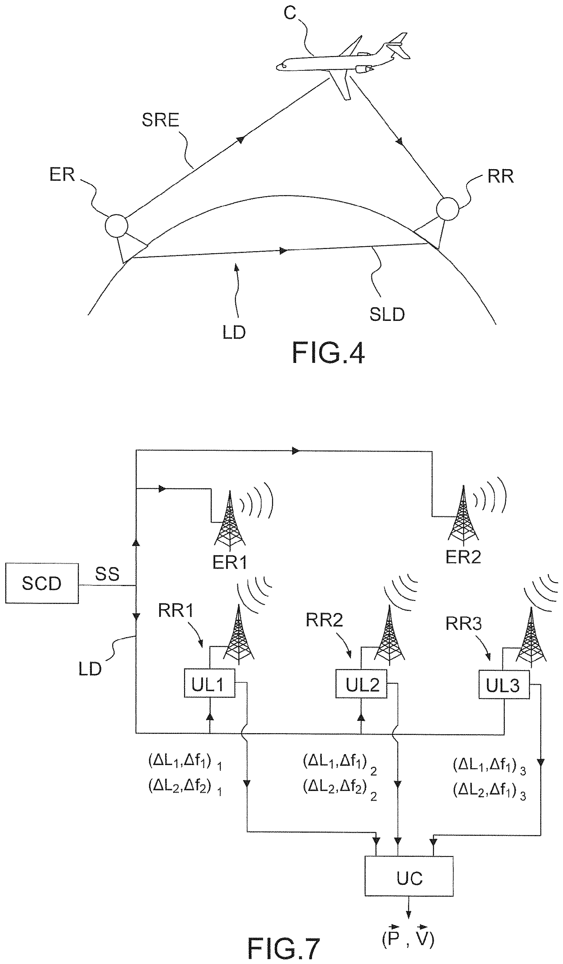

Comme illustré sur la figure 4, un procédé de détection selon l'invention se base sur l'utilisation d'au moins un récepteur RR qui est situé hors de la vue d'un émetteur ER. Dans le cas de la figure, c'est la courbure de la surface terrestre qui s'interpose entre l'émetteur et le récepteur ; dans d'autres modes de réalisation, il peut s'agir d'un obstacle tel qu'une montagne. L'émetteur et le récepteur qui ne sont pas en ligne de vue sont reliés entre eux par une ligne de transmission de données LD qui véhicule un signal SLD. Le récepteur RR utilise ce signal pour reconstruire une réplique de celui qu'il aurait reçu par propagation directe en provenance de l'émetteur si une telle propagation avait été possible. La distance bistatique de la cible C est donc déterminée à partir de ladite réplique ainsi reconstruite et du signal radioélectrique généré par l'émetteur ER et qui parvient au récepteur après réflexion par ladite cible.

La ligne de transmission des données peut être filaire (câble coaxial, fibre optique...), voire sans fil (auquel cas, il est nécessaire d'avoir recours à des répéteurs). Elle peut être dédiée ou faire partie d'un réseau de télécommunications. Il est préférable que sa latence soit connue ou mesurable, par exemple grâce à un mécanisme de synchronisation qui sera détaillé plus loin, ou au moins constante voire lentement variable.

Le signal de référence SLT peut être analogique ou, de préférence, numérique. Il peut s'agir d'une réplique (éventuellement numérisée) du signal radioélectrique SRE - le plus souvent converti à fréquence intermédiaire, voire en bande de base - mais il peut s'agir plus généralement de tout signal transportant toute l'information nécessaire pour reconstituer ledit signal radioélectrique.

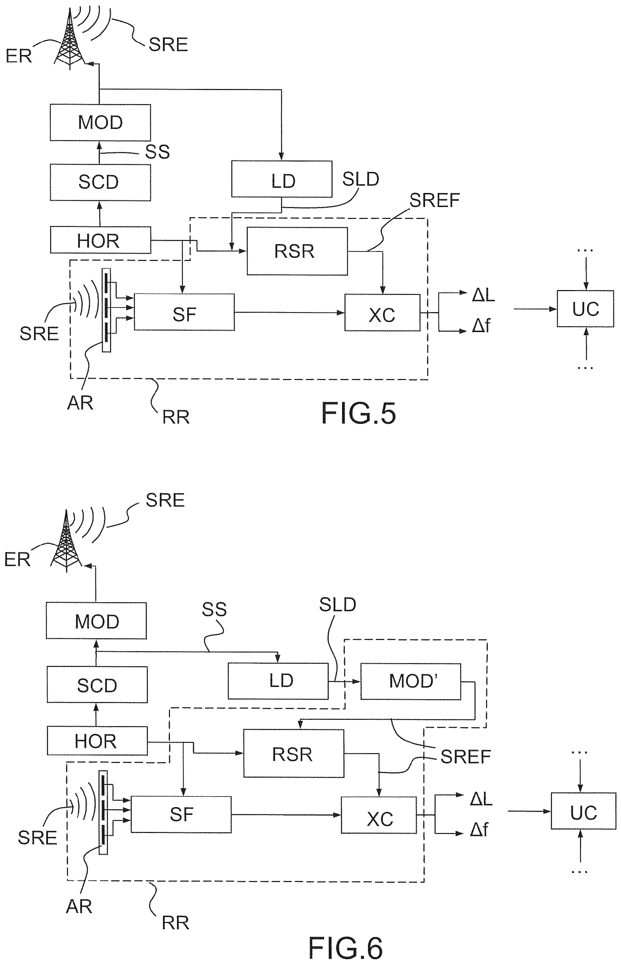

La figure 5 illustre plus en détail la structure et le fonctionnement d'un système de détection selon un premier mode de réalisation de l'invention. L'émetteur ER est un émetteur de télévision numérique, qui reçoit d'une station centrale de diffusion SCD un signal source SS, numérique, qui représente la succession d'octets constituant un fichier MPEG. Ce signal pilote un modulateur numérique MOD, paramétré avec des paramètres de modulation propres à l'émetteur, qui génère un signal à fréquence intermédiaire. Ce signal :
- d'une part, est converti à radiofréquence pour être irradié par une antenne d'émission sous la forme d'un signal radioélectrique SRE ;
- d'autre part est échantillonné et quantifié pour être transmis en format numérique le long de la ligne de transmission des données LD, sous la forme d'un signal numérique de référence SLD. Au niveau du récepteur RR, un module RSR de reconstruction de réplique utilise ce signal numérique pour reconstruire ou régénérer un signal SREF « imitant » un signal qui aurait été reçu par une antenne dudit récepteur par propagation directe (converti à fréquence intermédiaire et, le cas échéant, numérisé). Pour ce faire, le module RSR doit retarder la réplique reconstituée SREF d'un temps équivalent au temps de propagation hypothétique d'un signal radioélectrique sur la distance séparant l'émetteur et le récepteur, moins la latence de la ligne de transmission des données LD. Cela est rendu possible par l'existence d'une référence temporelle commune HOR entre l'émetteur et le récepteur. Il peut s'agir par exemple d'une horloge GPS.

Une égalisation du signal reconstitué peut également être prévue, pour imiter le filtrage fréquentiel introduit par la propagation dans l'atmosphère.

De manière conventionnelle, le récepteur comprend également une antenne à réseau AR pour recevoir le signal radioélectrique SRE qui lui parvient par l'intermédiaire d'une réflexion sur une cible à détecter. Cette antenne à réseau est pilotée par un circuit synthétiseur de faisceau SF qui détermine ses lobes de réception de manière à maximiser le signal collecté. En effet, même si l'émetteur n'est pas en ligne de vue, si on n'utilisait pas une antenne adaptative le récepteur pourrait capter des interférences provenant d'émetteurs plus proches opérant à la même fréquence. Le signal reçu par l'antenne, après un prétraitement qui inclut une conversion à fréquence intermédiaire, ainsi que la réplique reconstituée SREF sont communiqués à un module corrélateur XC. Ce dernier calcule la corrélation croisée de ces deux signaux avec des décalages temporels et fréquentiels différents, et détermine ceux qui maximisent cette corrélation. Le décalage temporel ainsi identifié fournit une information ΔL sur la distance bistatique de la cible, et le décalage fréquentiel Δf sur sa vitesse bistatique. Ainsi, chaque récepteur détermine une paire de valeurs (ΔL, Δf) pour chaque émetteur auquel il est relié par la ligne de transmission de données LD. Une unité centrale de traitement UC collecte ces valeurs, communiquées par une pluralité de récepteurs, et les utilise - conformément à l'art antérieur - pour localiser ladite cible et déterminer son vecteur de vitesse.

Le schéma de la figure 6 illustre un deuxième mode de réalisation, dans lequel c'est le signal source SS qui est transmis le long de la ligne de transmission LD. Un modulateur MOD' doit alors être prévu au niveau du récepteur pour reconstituer le signal à fréquence intermédiaire qui sert à la reconstruction du signal de référence. Cette complexification du récepteur constitue la contrepartie d'une simplification important de la ligne de transmission de données. En effet, la station centrale de diffusion SCD peut transmettre un même signal source SS à plusieurs émetteurs différents, qui lui appliquent leurs paramètres de modulation propres pour générer des signaux radioélectriques respectifs. Dans le deuxième mode de réalisation la ligne de transmission de données doit transmettre aux récepteurs ce signal source unique, et non les différents signaux modulés générés par les émetteurs comme dans le cas du premier mode de réalisation.

La figure 7 illustre schématiquement la structure générale d'un système selon ledit deuxième mode de réalisation. Ce système comprend une station centrale de diffusion SCD transmettant le signal source SS à deux émetteurs ER1, ER2 et (par l'intermédiaire de la ligne de transmission de données LD) à trois récepteurs RR1, RR2, RR3. Chaque récepteur comporte une antenne et une unité locale de traitement des données UL1 - UL3. Chaque dite unité locale de traitement comprend les blocs de modulation, reconstitution des répliques et corrélation croisée dont le fonctionnement a été décrit plus haut, et génère deux paires de valeurs (ΔLᵢ, Δfᵢ)ⱼ, où « i » identifie l'émetteur (i=1,2) et «j» le récepteur (j=1,2,3). Ces valeurs sont transmises à l'unité centrale de traitement UC, qui s'en sert pour calculer la position *̅P̅*̅ et la vitesse *̅V̅*̅ de la (ou de chaque) cible.

On remarquera que, pour localiser une cible, trois valeurs ΔLᵢ suffisent. Or, dans le système de la figure 7 il y a six de ces valeurs ; on peut donc calculer la position *̅P̅*̅ de vingt façons différentes - et à cause des inévitables erreurs et imprécisions on obtiendra vingt positions différentes. Il est possible d'exploiter cette redondance pour améliorer la synchronisation entre les récepteurs et les émetteurs, en déterminant les corrections de temporisation qui permettent de minimiser l'erreur quadratique moyenne entre les différentes positions calculées. A la limite, cela peut permettre de déterminer une référence temporelle commune sans besoin d'avoir recours à une horloge extérieure, pourvu que la latence de la liaison de transmission soit constante ou, au moins, lentement variable. Pour ce faire, il suffit d'ajouter au système de moindres carrés une inconnue pour chaque voie d'émission et de réception ; si le nombre de mesures est suffisant, l'identification de ces termes inconnus est possible.

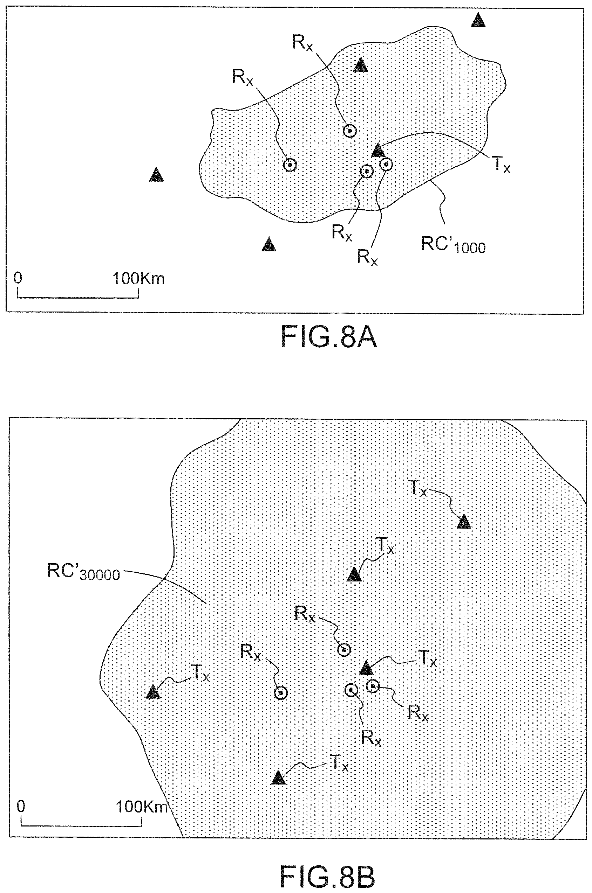

Les figures 8A et 8B permettent d'apprécier le résultat technique de l'invention. Elles montrent la couverture de détection obtenue au moyen d'un système de détection selon l'invention, comprenant un émetteur et quatre récepteurs qui ne sont pas en vue dudit émetteur en raison de leur distance. Sur la figure 8A, la région RC'₁₀₀₀ représente la couverture à une altitude de 1000 pieds (304,8 m) ; sur la figure 3B, la région RC'₃₀·₀₀₀ représente la couverture à une altitude de 30.000 pieds (12.192 m). Même à cette dernière altitude, il n'y a pas de « cône aveugle » du fait de la plus grande séparation émetteur - récepteurs.

## Revendications

1. Procédé de localisation d'une cible comportant les étapes suivantes :
a) recevoir, au moyen de N≥1 récepteurs (RR1, RR2, RR3), des signaux radioélectriques d'opportunité (SRE) émis par M≥1 émetteurs (ER) et réfléchis par ladite cible (C), avec N·M≥3, ledit ou au moins un dit émetteur étant situé hors de la vue dudit ou d'au moins un dit récepteur ;
b) recevoir, au moyen d'une liaison de transmission de données (LD), un ou plusieurs signaux dit de référence, représentatifs des signaux radioélectriques émis par ledit ou chaque dit émetteur situé hors de la vue dudit ou d'au moins un dit récepteur ; et
c) à partir desdits signaux radioélectriques et dudit ou desdits signaux de référence, déterminer la position de ladite cible ;
**caractérisé en ce que** ladite étape c) comporte la reconstruction, à partir dudit ou desdits signaux de référence, de répliques des signaux radioélectriques qui seraient reçus par ledit ou chaque dit récepteur par propagation directe à partir dudit ou de chaque dit émetteur situé hors de vue si une telle propagation directe était possible, ladite reconstruction comportant une opération de compensation du retard de transmission dudit ou desdits signaux de référence le long de ladite ligne de transmission de données ; et **en ce que** :
ladite étape c) est mise en oeuvre à l'aide d'une référence temporelle commune (HOR) au dit ou auxdits émetteurs et audit ou auxdits récepteurs.

2. Procédé selon la revendication 1 dans lequel ladite reconstruction comporte une opération de décalage en fréquence desdites répliques.

3. Procédé selon l'une des revendications précédentes dans lequel ladite reconstruction comporte également une opération de décalage temporel desdites répliques pour introduire un retard proportionnel à la distance entre ledit ou chaque émetteur situé hors de vue et ledit ou chaque dit récepteur.

4. Procédé selon l'une des revendications précédentes dans lequel ladite étape c) comprend : le calcul d'au moins trois distances bistatiques entre ledit ou au moins un dit récepteur, ledit ou au moins un dit émetteur et ladite cible, ce calcul état effectué par corrélation entre les signaux reçus par ledit ou lesdits récepteurs et lesdites répliques ; et la localisation de ladite cible à partir desdites distances bistatiques.

5. Procédé selon la revendication 4 dans lequel ladite étape c) comprend une opération de synchronisation itérative desdites répliques avec ladite référence temporelle commune, réalisée par minimisation des écarts entre les positions de ladite cible déterminées en utilisant différents ensembles de trois dites distances bistatiques.

6. Procédé selon l'une des revendications précédentes, dans lequel ladite étape c) comprend une opération de synchronisation desdites répliques avec ladite référence temporelle commune au moyen de marqueurs temporels contenus dans lesdits signaux radioélectriques et dans ledit ou chaque dit signal de référence.

7. Procédé selon l'une des revendications 4 ou 5 dans lequel ladite corrélation est effectuée en utilisant une pluralité de versions desdites répliques présentant des décalages Doppler différents, son résultat étant également utilisé pour déterminer une vitesse de déplacement de ladite cible.

8. Procédé selon l'une des revendications précédentes dans lequel ladite étape c) comporte également une opération d'égalisation desdites répliques pour simuler une propagation directe entre un dit émetteur et un dit récepteur.

9. Procédé selon l'une des revendications précédentes dans lequel lesdits signaux radioélectriques sont des signaux de télévision.

10. Procédé selon l'une des revendications précédentes dans lequel ledit ou chaque signal de référence est un signal source, à partir duquel une pluralité desdits émetteurs génèrent les signaux radioélectriques correspondants en utilisant des paramètres de modulation respectifs.

11. Application d'un procédé selon l'une des revendications précédentes à la localisation d'aéronefs, notamment pour la surveillance primaire du trafic aérien.

12. Système radar multistatique comprenant M≥1 émetteurs (ER) de signaux radioélectriques d'opportunité, N≥1 récepteurs (RR1, RR2, RR3) pour recevoir lesdits signaux radioélectriques, avec N·M≥3, ledit ou au moins un dit émetteur étant situé hors de la vue dudit ou d'au moins un dit récepteur, ainsi que des moyens de traitement des données ; comprenant également une liaison de transmission de données (LD) pour transmettre auxdits moyens de traitement des données un ou plusieurs signaux dit de référence, représentatifs des signaux radioélectriques émis par ledit ou chaque dit émetteur situé hors de la vue dudit ou d'au moins un dit récepteur, lesdits moyens de traitement des données étant configurés ou programmés pour déterminer la position d'une cible réfléchissant les signaux radioélectriques émis par ledit ou lesdits émetteurs à partir des signaux radioélectriques reçus par ledit ou lesdits récepteurs et dudit ou desdits signaux de référence.
**caractérisé en ce que** lesdits moyens de traitement de données sont configurés et programmés pour reconstruire, à partir dudit ou desdits signaux de référence, de répliques des signaux radioélectriques qui seraient reçus par ledit ou chaque dit récepteur par propagation directe à partir dudit ou de chaque dit émetteur situé hors de vue si une telle propagation directe était possible, et pour utiliser lesdites répliques pour déterminer la position de ladite cible, ladite reconstruction comportant une opération de compensation du retard de transmission dudit ou desdits signaux de référence le long de ladite ligne de transmission de données ; et **en ce que** lesdits moyens de traitement des données sont configurés ou programmés pour déterminer la position de ladite cible à l'aide d'une référence temporelle commune (HOR) au dit ou auxdits émetteurs et audit ou auxdits récepteurs.

13. Système selon la revendication 12 dans lequel ledit signal de référence est un signal source à partir duquel une pluralité desdits émetteurs génèrent les signaux radioélectriques correspondants en utilisant des paramètres de modulation respectifs.

14. Système selon l'une des revendications 12 ou 13 dans lequel lesdits signaux radioélectriques sont des signaux de télévision numérique terrestre.

15. Système selon l'une des revendications 12 à 14 dans lequel lesdits moyens de traitement des données comprennent :
- des unités locales (UL1, UL2, UL3), associées à des récepteurs respectifs, programmées ou configurées pour : recevoir ledit ou au moins un dit signal de référence ; reconstruire, à partir dudit ou desdits signaux de référence, des répliques des signaux radioélectriques qui seraient reçus par lesdits récepteurs par propagation directe à partir dudit ou de chaque dit émetteur situé hors de vue si une telle propagation directe était possible ; et calculer, par corrélation entre les signaux reçus par lesdits récepteurs et lesdites répliques, une pluralité de distances bistatiques entre ledit récepteur, ledit ou au moins un dit émetteur et ladite cible ; et
- une unité centrale (UC) configurée ou programmée pour recevoir desdites unités locales les distances bistatiques correspondantes et les utiliser pour déterminer la position de ladite cible.

16. Système selon l'une des revendications 12 à 15 comprenant également un dispositif pour procurer une référence temporelle commune audit ou auxdits émetteurs, au dit ou auxdits récepteurs et auxdits moyens de traitement des données.

17. Système de surveillance du trafic aérien comportant, en tant que radar primaire, un système radar multistatique selon l'une des revendications 12 à 16.

## Patentansprüche

1. Verfahren zum Orten eines Ziels, das die folgenden Schritte beinhaltet:
a) Empfangen, mittels N≥1 Empfängern (RR1, RR2, RR3), von radioelektrischen Gelegenheitssignalen (SRE), die von M≥1 Sendern (ER) gesendet und von dem Ziel (C) reflektiert werden, wobei N·M≥3 ist, wobei der oder wenigstens ein Sender sich außerhalb der Sicht des oder wenigstens eines Senders befindet;
b) Empfangen, mittels einer Datenübertragungsleitung (LD), von einem oder mehreren sogenannten Referenzsignalen, die die radioelektrischen Signale repräsentieren, die von dem oder jedem außerhalb der Sicht des oder wenigstens eines Empfängers befindlichen Sender ausgesendet werden; und
c) Bestimmen der Position des Ziels auf der Basis der radioelektrischen Signale und des oder der Referenzsignals/e;
**dadurch gekennzeichnet, dass** Schritt c) das Rekonstruieren, auf der Basis des oder der Referenzsignals/e, von Repliken der radioelektrischen Signale beinhaltet, die von dem oder jedem Empfänger durch Direktausbreitung von dem oder jedem außerhalb der Sicht befindlichen Sender empfangen würden, wenn eine solche Direktausbreitung möglich wäre, wobei das Rekonstruieren einen Vorgang des Kompensierens der Übertragungsverzögerung des oder der Referenzsignals/e über die Datenübertragungsleitung beinhaltet; und dadurch, dass
Schritt c) mit Hilfe einer Zeitreferenz (HOR), die dem oder den Sender(n) und dem oder den Empfänger(n) gemeinsam ist, durchgeführt wird.

2. Verfahren nach Anspruch 1, bei dem das Rekonstruieren einen Vorgang des Frequenzversetzens der Repliken beinhaltet.

3. Verfahren nach einem der vorherigen Ansprüche, bei dem das Rekonstruieren auch einen Vorgang des zeitlichen Versetzens der Repliken beinhaltet, um eine Verzögerung proportional zur Distanz zwischen dem oder jedem außerhalb der Sicht befindlichen Sender und dem oder jedem Empfänger einzuführen.

4. Verfahren nach einem der vorherigen Ansprüche, bei dem Schritt c) Folgendes umfasst: Berechnen von wenigstens drei bistatischen Distanzen zwischen dem oder wenigstens einem Empfänger, dem oder wenigstens einem Sender und dem Ziel, wobei diese Berechnung durch Korrelation zwischen den von dem oder den Empfänger(n) und den Repliken empfangenen Signalen erfolgt; und die Ortung des Ziels auf der Basis der bistatischen Distanzen.

5. Verfahren nach Anspruch 4, bei dem Schritt c) einen Vorgang des iterativen Synchronisierens der Repliken mit der gemeinsamen Zeitreferenz umfasst, realisiert durch Minimieren der Abstände zwischen den Positionen des Ziels, ermittelt unter Anwendung von unterschiedlichen Sätzen von drei bistatischen Distanzen.

6. Verfahren nach einem der vorherigen Ansprüche, bei dem Schritt c) einen Vorgang des Synchronisierens der Repliken mit der gemeinsamen Zeitreferenz mittels zeitlicher Marker umfasst, die in den radioelektrischen Signalen und in dem oder jedem Referenzsignal enthalten sind.

7. Verfahren nach Anspruch 4 oder 5, in dem die Korrelation unter Nutzung mehrerer Versionen der Repliken erfolgt, die unterschiedliche Doppler-Versätze aufweisen, wobei das Ergebnis auch zum Bestimmen einer Bewegungsgeschwindigkeit des Ziels benutzt wird.

8. Verfahren nach einem der vorherigen Ansprüche, bei dem Schritt c) auch einen Vorgang des Entzerrens der Repliken zum Simulieren einer Direktausbreitung zwischen einem Sender und einem Empfänger beinhaltet.

9. Verfahren nach einem der vorherigen Ansprüche, bei dem die radioelektrischen Signale Fernsehsignale sind.

10. Verfahren nach einem der vorherigen Ansprüche, bei dem das oder jedes Referenzsignal ein Quellsignal ist, auf dessen Basis mehrere Sender die entsprechenden radioelektrischen Signale anhand jeweiliger Modulationsparameter erzeugen.

11. Anwenden eines Verfahrens nach einem der vorherigen Ansprüche auf die Ortung von Flugzeugen, insbesondere zur primären Überwachung des Flugverkehrs.

12. Multistatisches Radarsystem, das M≥1 Sender (ER) von radioelektrischen Gelegenheitssignalen, N≥1 Empfänger (RR1, RR2, RR3) zum Empfangen der radioelektrischen Signale umfasst, wobei N·M≥3 ist, wobei sich der oder wenigstens ein Sender außerhalb der Sicht des oder wenigstens eines Empfängers befindet, sowie Mittel zum Verarbeiten der Daten; das auch eine Datenübertragungsverbindung (LD) zum Übertragen eines oder mehrerer sogenannter Referenzsignale zu den Datenverarbeitungsmitteln umfasst, wobei die Referenzsignale die radioelektrischen Signale repräsentieren, die von dem oder jedem außerhalb der Sicht des oder wenigstens eines Empfängers befindlichen Senders gesendet werden, wobei die Datenverarbeitungsmittel zum Bestimmen der Position eines Ziels konfiguriert oder programmiert sind, das die von dem oder den Sender(n) gesendeten radioelektrischen Signale reflektiert, auf der Basis der von dem oder den Empfänger(n) empfangenen radioelektrischen Signale und des oder der Referenzsignals/e;
**dadurch gekennzeichnet, dass** die Datenverarbeitungsmittel zum Rekonstruieren, auf der Basis des oder der Referenzsignale, von Repliken der radioelektrischen Signale konfiguriert und programmiert sind, die von dem oder jedem Empfänger durch Direktausbreitung auf der Basis des oder jedes außerhalb der Sicht befindlichen Senders empfangen würden, wenn eine solche Direktausbreitung möglich wäre, und zum Nutzen der Repliken zum Bestimmen der Position des Ziels, wobei das Rekonstruieren einen Vorgang des Kompensierens der Übertragungsverzögerung des oder der Referenzsignals/e über die Datenübertragungsleitung beinhaltet; und dadurch, dass die Datenverarbeitungsmittel zum Bestimmen der Position des Ziels mit Hilfe einer Zeitreferenz (HOR), die dem oder den Sender(n) und dem oder den Empfänger(n) gemeinsam ist, konfiguriert oder programmiert sind.

13. System nach Anspruch 12, in dem das Referenzsignal ein Quellsignal ist, auf dessen Basis mehrere Sender die entsprechenden radioelektrischen Signale anhand jeweiliger Modulationsparameter erzeugen.

14. System nach Anspruch 12 oder 13, in dem die radioelektrischen Signale terrestrische digitale Fernsehsignale sind.

15. System nach einem der Ansprüche 12 bis 14, in dem die Datenverarbeitungsmittel Folgendes umfassen:
- lokale Einheiten (UL1, UL2, UL3), die mit jeweiligen Empfängern assoziiert sind, programmiert oder konfiguriert zum: Empfangen des oder wenigstens eines Referenzsignals; Rekonstruieren, auf der Basis des oder der Referenzsignals/e, von Repliken der radioelektrischen Signale, die von den Empfängern durch direkte Ausbreitung von dem oder jedem außerhalb der Sicht befindlichen Sender empfangen würden, wenn eine solche direkte Ausbreitung möglich wäre, und Berechnen, durch Korrelation zwischen den von den Empfängern empfangenen Signalen und den Repliken, von mehreren bistatischen Distanzen zwischen dem Empfänger, dem oder wenigstens einem Sender und dem Ziel; und
- eine zentrale Einheit (UC), konfiguriert oder programmiert zum Empfangen von den lokalen Einheiten der entsprechenden bistatischen Distanzen und zum Nutzen derselben zum Bestimmen der Position des Ziels.

16. System nach einem der Ansprüche 12 bis 15, das auch eine Vorrichtung zum Beschaffen einer Zeitreferenz, die dem oder den Sender(n), dem oder den Empfänger(n) und den Datenverarbeitungsmitteln gemeinsam ist, umfasst.

17. Flugverkehrsüberwachungssystem, das als Primärradar ein multistatisches Radarsystem nach einem der Ansprüche 12 bis 16 umfasst.

## Claims

1. A method for locating a target comprising the following steps:
a) receiving, by means of N≥1 receivers, (RR1, RR2, RR3) opportunity radioelectric signals (SRE) transmitted by M≥1 transmitters (ER) and reflected by said target (C), with N·M≥3, said or at least one said transmitter being situated out of the sight of said or of at least one said receiver;
b) receiving, by means of a data transmission link (LD), one or more reference signals, representative of the radioelectric signals transmitted by said or each said transmitter situated out of the sight of said or of at least one said receiver; and
c) determining the position of said target on the basis of said radioelectric signals and of said reference signal or signals;
**characterised in that** said step c) comprises the reconstruction, on the basis of said reference signal or signals, of replicas of the radioelectric signals which would be received by said or each said receiver by direct propagation from said or from each said transmitter situated out of sight if direct propagation such as this were possible, said reconstruction comprising a compensation operation of the transmission delay of said reference signal or signals along said data transmission line; and **in that**
said step c) is carried out using a common temporal reference (HOR) shared by said transmitter or transmitters and said receiver or receivers.

2. The method according to claim 1, wherein said reconstruction comprises an operation of frequency-shifting of said replicas.

3. The method according to any of the preceding claims, wherein said reconstruction also comprises an operation of temporal shifting of said replicas so as to introduce a delay proportional to the distance between said or each transmitter situated out of sight and said or each said receiver.

4. The method according to any of the preceding claims, wherein said step c) comprises: the calculation of at least three bistatic distances between said or at least one said receiver, said or at least one said transmitter and said target, this calculation being performed by correlation between the signals received by said receiver or said receivers and said replicas; and the location of said target on the basis of said bistatic distances.

5. The method according to claim 4, wherein said step c) comprises an operation of iterative synchronization of said replicas with said common temporal reference, carried out by minimizing the disparities between the positions of said target that are determined using various sets of three said bistatic distances.

6. The method according to any of the preceding claims, wherein said step c) comprises an operation of synchronizing said replicas with said common temporal reference by means of temporal markers contained in said radioelectric signals and in said or each said reference signal.

7. The method according to any of claims 4 or 5, wherein said correlation is performed using a plurality of versions of said replicas exhibiting different Doppler shifts, its result being also used to determine a velocity of displacement of said target.

8. The method according to any of the preceding claims, wherein said step c) also comprises an operation of equalizing said replicas so as to simulate a direct propagation between a said transmitter and a said receiver.

9. The method according to any of the preceding claims, wherein said radioelectric signals are television signals.

10. The method according to any of the preceding claims, wherein said or each reference signal is a source signal, on the basis of which a plurality of said transmitters generate the corresponding radioelectric signals by using respective modulation parameters.

11. Application of the method according to any one of the preceding claims to aircraft location, notably for the primary monitoring of air traffic.

12. A multistatic radar system comprising M≥1 transmitters (ER) of opportunity radioelectric signals, N≥1 receivers (RR1, RR2, RR3) for receiving said radioelectric signals, with N·M≥3, said or at least one said transmitter being situated out of the sight of said or of at least one said receiver, as well as data processing means; also comprising a data transmission link (LD) for transmitting to said data processing means one or more reference signals, representative of the radioelectric signals transmitted by said or each said transmitter situated out of the sight of said or of at least one said receiver, said data processing means being configured or programmed to determine the position of a target reflecting the radioelectric signals transmitted by said transmitter or said transmitters on the basis of the radioelectric signals received by said receiver or said receivers and of said reference signal or of said reference signals,
**characterised in that** said data processing means are configured and programmed to reconstruct, on the basis of said reference signal or of said reference signals, replicas of the radioelectric signals which would be received by said or each said receiver by direct propagation from said or from each said transmitter situated out of sight if direct propagation such as this were possible, and to use said replicas to determine the position of said target, said reconstruction comprising a compensation operation of the transmission delay of the reference signal or the reference signals along said data transmission line; and **in that** said data processing means are configured or programmed to determine the position of said target using a common temporal reference (HOR) shared by said transmitter or said transmitters and by said receiver or said receivers.

13. The system of claim 12, wherein said reference signal is a source signal on the basis of which a plurality of said transmitters generate the corresponding radioelectric signals by using respective modulation parameters.

14. The system according to any one of claims 12 or 13, wherein said radioelectric signals are digital terrestrial television signals.

15. The system according to any one of claims 12 to 14, wherein said data processing means comprise:
- local units (UL1, UL2, UL3), associated with respective receivers and programmed or configured to: receive said or at least one said reference signal; reconstruct, on the basis of said reference signal or of said reference signals, replicas of the radioelectric signals which would be received by said receivers by direct propagation from said or from each said transmitter situated out of sight if direct propagation such as this were possible; and calculate, by correlation between the signals received by said receivers and said replicas, a plurality of bistatic distances between said receiver, said or at least one said transmitter and said target; and
- a central unit (UC) configured or programmed to receive from said local units the corresponding bistatic distances and to use them to determine the position of said target.

16. The system according to any one of claims 12 to 15, also comprising a device for procuring a common temporal reference shared by said transmitter or transmitters, by said receiver or receivers and by said data processing means.

17. A system for monitoring air traffic comprising, in the guise of primary radar, a multistatic radar system according to any one of claims 12 to 16.
